# EUROPEAN PATENT APPLICATION

(11) **EP 3 660 192 A1**
(43) Date of publication of application: **03.06.2020**
(21) Application number: 18837177.7
(22) Date of filing: 28.06.2018
(51) Int. Cl.: D03D 3/00, C08J 5/04, D03D 11/00, D03D 25/00

(54) **FIBER STRUCTURE AND FIBER REINFORCED COMPOSITE MATERIAL**

(30) Priority: 24.07.2017 JP 2017142969
(71) Applicant: Kabushiki Kaisha Toyota Jidoshokki, Kariya-shi, Aichi 448-8671 (JP)
(72) Inventor: MAKI, Aya, Kariya-shi Aichi 448-8671 (JP); KAMIYA, Ryuta, Kariya-shi Aichi 448-8671 (JP)
(74) Representative: TBK
(86) International application number: PCT/JP2018/024575
(87) International publication number: WO 2019/021738

(57) **Abstract**

A fiber structure includes a first corner section, which is a boundary section between a first structural portion and a second structural portion, a second corner section, which is a boundary section between the first structural portion and a third structural portion, and a third corner section, which is a boundary section between the second structural portion and the third structural portion. A first yarn that extends continuously in the first structural portion and the second structural portion is bent at the first corner section. A second yarn that extends continuously in the first structural portion and the third structural portion is bent at the second corner section. At least one of the first yarn and the second yarn, which extend continuously in the second structural portion and third structural portion, is bent at the third corner section.

## Description

### TECHNICAL FIELD

The present invention relates to a fiber structure constituted by a multilayer woven fabric and a fiber reinforced composite material employing the fiber structure as a reinforcement base material.

Fiber-reinforced composite materials are generally used as light-weight structural materials. Fiber structures may serve as reinforcement base materials for fiber-reinforced composite materials. Fiber-reinforced composite materials having fiber structures impregnated with matrix resin are used as structural materials for aircrafts, vehicles, and architectural structures. Further, a multilayer woven fabric is used as the fiber structure. The multilayer woven fabric is formed by, for example, binding warp layers, in which warps are arranged, and weft layers, in which wefts are arranged,, together by binding yarns in a stacking direction.

To use the fiber reinforced composite material for a variety of purposes, the fiber reinforced composite material must be formed in a shape satisfying the purpose, such as an L, U, or V shape. To manufacture an L-shaped fiber reinforced composite material, for example, an L-shaped fiber structure is necessary. As disclosed in Patent Document 1, a three-dimensional fiber structure is bent to have an L shape having two plate-like portions crossing each other at the corner section. The three-dimensional fiber structure includes an x-yarn layer, a y-yarn layer, and a bias yarn layer, which are arranged parallel to one another, as well as thickness-direction yarns and corner-section yarns, by which the aforementioned yarn layers are joined to one another.

The x-yarn layer is constituted by first in-plane arranged yarns, which are arranged in the direction along the corner section. The y-yarn layer is constituted by second in-plane arranged yarns, which are arranged in a direction perpendicular to the first in-plane arranged yarns. The bias yarn layer is constituted by bias yarns, which are arranged in an inclined manner with respect to the first and second in-plane arranged yarns. The thickness-direction yarns extend in directions perpendicular to the yarn layers in sections other than the corner section, thus joining the layers together in the thickness direction of the three-dimensional fiber structure. The corner-section yarns are arranged parallel to the plane that bisects the angle formed by the two plate-like portions crossing each other.

In the L-shaped three-dimensional fiber structure, the two plate-like portions are connected to each other at the corner section. The second in-plane arranged yarns and the bias yarns extend in a direction crossing the corner section. The second in-plane arranged yarns and the bias yarns are arranged to extend continuously in the plate-like portions without being cut in the corner section. The corner section is thus reinforced by the second in-plane arranged yarns and the bias yarns.

However, the three-dimensional structure of Patent Document 1 can be manufactured uniquely by a special loom, which raises the manufacturing cost. Patent Document 2 discloses a fiber structure that has a reinforced corner section and is manufactured without employing a special loom. A reinforcement fiber molded body disclosed in Patent Document 2 is formed by stacking quadrangular sheets of base material together. Each sheet of the base material has cut portions formed by cutting a section of each of the four sides. Each base material includes a body portion and an overlapped portion bent with respect to the body portion. The base material is folded by means of the cut portions to bend the overlapped portion with respect to the body portion.

The reinforcement fiber molded body, which is shaped like a quadrangular box, is formed by stacking sheets of the base material together such that the body portions are overlapped with each other and the overlapped portions are overlapped with each other. Each of the corner sections of the reinforcement fiber molded body is reinforced by overlapping the overlapped portions with each other.

### PRIOR ART DOCUMENT

### Patent Document

Patent Document 1: Japanese Laid-Open Patent Publication No. 9-137336
Patent Document 2: Japanese Laid-Open Patent Publication No. 2011-167936

### SUMMARY OF THE INVENTION

### Problems that the Invention is to Solve

The reinforcement fiber molded body of Patent Document 2 requires weaving sheets of the base material and forming the cut portions in respective sheets of the base material before overlapping the body portions and the overlapped portions of the base material sheets with each other. This necessitates a great number of manufacturing steps and raises the manufacturing cost.

Accordingly, it is an objective of the present invention to provide a fiber structure and a fiber reinforced composite material capable of reinforcing corner sections while saving manufacturing costs.

### Means for Solving the Problems

In accordance with one aspect of the present disclosure, a fiber structure is provided that includes a first forming portion that forms a first structural portion, a plurality of second forming portions that are stacked together and form a second structural portion that crosses the first structural portion, a plurality of third forming portions that are stacked together and form a third structural portion that crosses the first structural portion and the second structural portion, a first corner section that is a boundary section between the first structural portion and the second structural portion, a second corner section that is a boundary section between the first structural portion and the third structural portion, and a third corner section that is a boundary section between the second structural portion and the third structural portion. The first forming portion, the second forming portions, and the third forming portions are each constituted by a multilayer woven fabric having a plurality of fiber layers that are stacked together and a binding yarn that binds the fiber layers together in a stacking direction. The fiber layers includes a fiber layer formed by a plurality of first yarns that are parallel to one another and a fiber layer formed by a plurality of second yarns that are parallel to one another. Those of the first yarns that extend continuously in the first structural portion and the second structural portion are bent at the first corner section. Those of the second yarns that extend continuously in the first structural portion and the third structural portion are bent at the second corner section. At least either those of the first yarns that extend continuously in the second structural portion and the third structural portion or those of the second yarns that extend continuously in the second structural portion and the third structural portion are bent along the third corner section.

In accordance with another aspect of the present disclosure, a fiber reinforced composite is provided that includes the above-described fiber structure and a matrix resin with which the fiber structure is impregnated.

### BRIEF DESCRIPTION OF THE DRAWINGS

Fig. 1 is a perspective view showing a fiber reinforced composite material according to an embodiment.
Fig. 2 is an enlarged cross-sectional view showing a section of a fiber structure according to the embodiment.
Fig. 3A is a perspective view showing the fiber structure before shaping.
Fig. 3B is a perspective view showing the fiber structure before shaping.
Fig. 4 is a perspective view showing the fiber structure of Fig. 3A in a state in which a first binding portion is folded at a folding portion.
Fig. 5 is a side view showing the fiber structure of Fig. 4.
Fig. 6 is a perspective view showing the fiber structure of Fig. 4 in a state in which a third forming portion is also folded at a folding portion.
Fig. 7 is a side view showing the fiber structure of Fig. 6.
Fig. 8 is a perspective view showing the fiber structure of Fig. 6 in a state in which a second binding portion is also folded at a folding portion.
Fig. 9 is a perspective view showing the fiber structure of Fig. 8 in a state in which a second forming portion is also folded at a folding portion.
Fig. 10 is a cross-sectional view taken along line 10-10 of Fig. 1, showing the fiber structure.
Fig. 11 is a cross-sectional view taken along line 11-11 of Fig. 1, showing the fiber structure of Fig.
Fig. 12 is a perspective view showing a fiber structure according to a modification.

### MODES FOR CARRYING OUT THE INVENTION

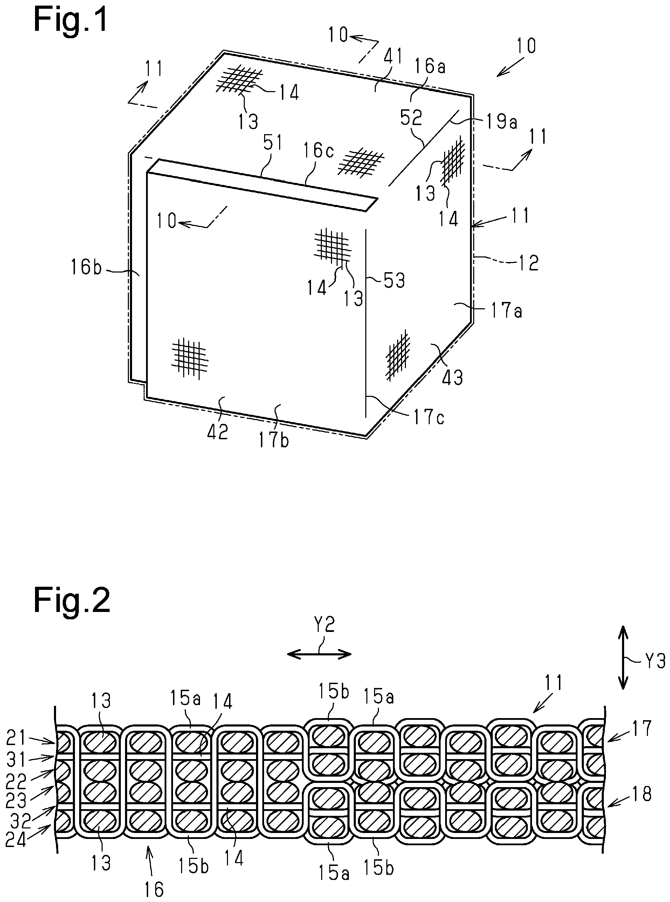

A fiber structure and a fiber reinforced composite material according to an embodiment will now be described with reference to Figs. 1 to 11.

As shown in Fig. 1, a fiber reinforced composite material 10 is constituted by forming a composite of a fiber structure 11 and a matrix resin 12. The fiber structure 11 is constituted by a multilayer woven fabric. Epoxy resin, which is thermosetting resin, for example, is used as the matrix resin.

With reference to Fig. 2, the fiber structure 11 includes wefts 13 as first yarns, warps 14 as second yarns, first binding yarns 15a, and second binding yarns 15b. The wefts 13 and the warps 14 are both made of reinforcement fiber. Each of the wefts 13 and each of the warps 14 extend perpendicularly to each other. In this embodiment, carbon fiber is used as the reinforcement fiber.

Referring to Fig. 1, the fiber structure 11 may have a cubic shape having three rectangular walls crossing one another (perpendicularly). The fiber structure 11 has a first structural portion 41 constituting a first wall of the three walls. The first structural portion 41 has a rectangular outer surface. The fiber structure 11 has a second structural portion 42. The second structural portion 42 constitutes a second wall of the three walls and crosses the first structural portion 41 (perpendicularly). The second structural portion 42 has a rectangular outer surface. The fiber structure 11 has a third structural portion 43 constituting a third wall of the three walls. The third structural portion 43 has a rectangular outer surface. The third structural portion 43 crosses the first structural portion 41 and the second structural portion 42 (perpendicularly).

The fiber structure 11 has a first corner section 51, a second corner section 52, and a third corner section 53. The first corner section 51 is the boundary section between the first structural portion 41 and the second structural portion 42. The second corner section 52 is the boundary section between the first structural portion 41 and the third structural portion 43. The third corner section 53 is the boundary section between the second structural portion 42 and the third structural portion 43.

The fiber structure 11 having the cubic shape is formed by shaping a fiber structure 11 having a flat rectangular plate-like shape. The fiber structure 11 before shaping will hereafter be described. The fiber structure 11 before shaping is also referred to as the parent material of the fiber structure 11.

As illustrated in Fig. 2, the fiber structure 11 includes weft layers in each of which the wefts 13 are arranged parallel to one another. The fiber structure 11 has a first weft layer 21, a second weft layer 22, a third weft layer 23, and a fourth weft layer 24. The second weft layer 22 is arranged below the first weft layer 21. The third weft layer 23 is arranged below the second weft layer 22. The fourth weft layer 24 is arranged below the third weft layer 23. The fiber structure 11 also includes warp layers in each of which the warps 14 are arranged parallel to one another.

The fiber structure 11 has a first warp layer 31 and a second warp layer 32. The first warp layer 31 is disposed between the first weft layer 21 and the second weft layer 22. The second warp layer 32 is arranged below the first warp layer 31 and disposed between the third weft layer 23 and the fourth weft layer 24. The first to fourth weft layers 21 to 24 and the first and second warp layers 31, 32 are all fiber layers. The first weft layer 21, the first warp layer 31, the second weft layer 22, the third weft layer 23, the second warp layer 32, and the fourth weft layer 24 are stacked together in this order from up to down.

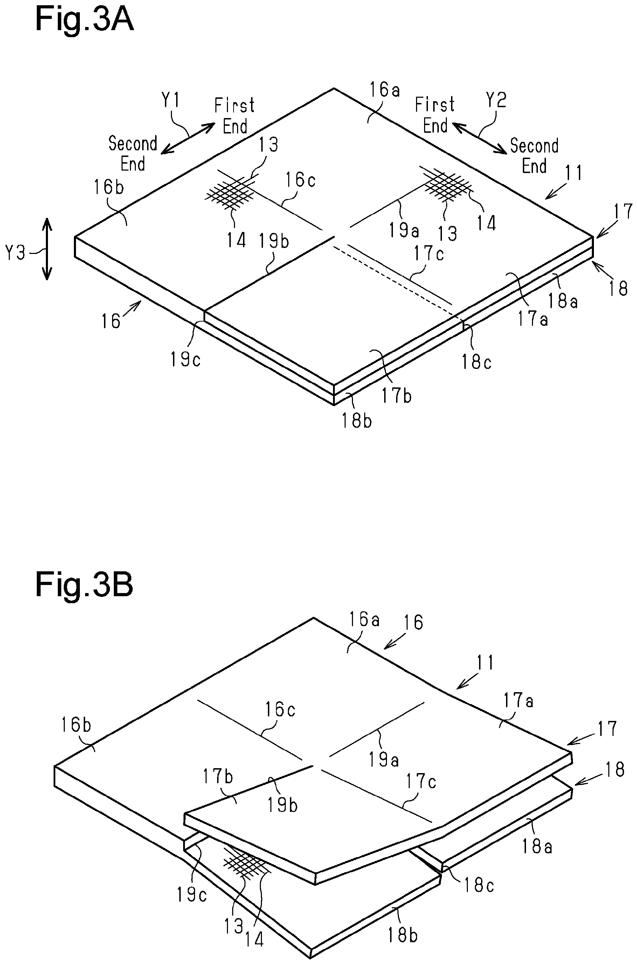

As shown in Fig. 3A, in the fiber structure 11 having the flat plate-like shape, which is, in other words, the parent material, the direction in which the yarn-axis of each weft 13 extends is defined as the first direction Y1. The direction in which the yarn-axis of each warp 14 extends is defined as the second direction Y2. Also, in the fiber structure 11 having the flat plate-like shape, the direction in which the fiber layers are stacked together is defined as the stacking direction Y3.

The fiber structure 11 before shaping includes a first binding portion 16 in the range from the middle to a first end in the second direction Y2. The first binding portion 16 is formed by binding the first weft layer 21, the first warp layer 31, the second weft layer 22, the third weft layer 23, the second warp layer 32, and the fourth weft layer 24 together in the stacking direction Y3 by the first binding yarns 15a and the second binding yarns 15b.

As shown in Fig. 2, the first and second binding yarns 15a, 15b each have a function of maintaining the shape of the fiber structure 11 and are one type of warps. The first and second binding yarns 15a, 15b are constituted by reinforcement fiber. The first and second binding yarns 15a, 15b are arranged parallel to the warps 14 and arranged at mutually different positions in the arrangement direction of the warps 14 (the first direction Y1).

The first and second binding yarns 15a, 15b are arranged to extend on the outer surfaces of the wefts 13 of the first weft layer 21 and then be folded back at positions above the warps 14 in the uppermost layer of the fiber structure 11 (the first warp layer 31). Also, the first and second binding yarns 15a, 15b are arranged to extend on the outer surfaces of the wefts 13 of the fourth weft layer 24 and then be folded back at the corresponding positions below the warps 14 in the lowermost layer (the second warp layer 32).

With reference to Fig. 3A or 3B, the fiber structure 11 has a second binding portion 17 and a third binding portion 18. The second binding portion 17 is from the middle to a first end in the stacking direction Y3 in the range from the middle to a second end in the second direction Y2. The third binding portion 18 is from the middle to a second end in the stacking direction Y3 in the aforementioned range. The second binding portion 17 is formed by binding the first weft layer 21, the first warp layer 31, and the second weft layer 22 together in the stacking direction Y3. The third binding portion 18 is formed by stacking the third weft layer 23, the second warp layer 32, and the fourth weft layer 24 together in the stacking direction Y3. The second binding portion 17 and the third binding portion 18 are formed by controlling the first binding yarns 15a and the second binding yarns 15b at the time of weaving using a loom.

As illustrated in Fig. 2, the second binding portion 17 is bound in the stacking direction Y3 by the first binding yarns 15a and the second binding yarns 15b. In the second binding portion 17, the first and second binding yarns 15a, 15b are arranged to extend on the outer surfaces of the wefts 13 of the first weft layer 21, which is the uppermost layer of the second binding portion 17, and then be folded back. The first and second binding yarns 15a, 15b are thus arranged to extend through the second binding portion 17 in the stacking direction Y3, proceed on the outer surfaces of the wefts 13 of the second weft layer 22, which is the lowermost layer of the second binding portion 17, and then be folded back.

The third binding portion 18 is bound in the stacking direction Y3 by the first binding yarns 15a and the second binding yarns 15b. In the third binding portion 18, the first and second binding yarns 15a, 15b are arranged to extend on the outer surfaces of the wefts 13 of the third weft layer 23, which is the uppermost layer of the third binding portion 18, and then be folded back. The first and second binding yarns 15a, 15b are thus arranged to extend through the third binding portion 18 in the stacking direction Y3, proceed on the outer surfaces of the wefts 13 of the fourth weft layer 24, which is the lowermost layer of the third binding portion 18, and then be folded back.

With reference to Figs. 3A and 3B, the second binding portion 17 is connected to the first binding portion 16 in the range from the middle to the first end in the first direction Y1. The second binding portion 17 is separate from the first binding portion 16 in the range from the middle to the second end in the first direction Y1. The warps 14 of the first warp layer 31 extend continuously in the first binding portion 16 and the second binding portion 17 in the second direction Y2. The first binding portion 16 and the second binding portion 17 thus are connected to each other in the second direction Y2.

The third binding portion 18 is connected to the first binding portion 16 in the second direction Y2. The warps 14 of the second warp layer 32 extend continuously in the first binding portion 16 and the third binding portion 18 in the second direction Y2. The first binding portion 16 and the third binding portion 18 are connected to each other in the second direction Y2. The third binding portion 18 is cut in the middle in the first direction Y1.

The section of the first binding portion 16 of the fiber structure 11 from the middle to the first end in the first direction Y1 is a first forming portion 16a for forming the first structural portion 41. The first forming portion 16a has a rectangular shape as viewed in the stacking direction Y3. In the first forming portion 16a, the first weft layer 21, the first warp layer 31, the second weft layer 22, the third weft layer 23, the second warp layer 32, and the fourth weft layer 24 are bound together in the stacking direction Y3 by the first binding yarns 15a and the second binding yarns 15b. The first forming portion 16a thus has six fiber layers.

The section of the first binding portion 16 of the fiber structure 11 from the middle to the second end in the first direction Y1 is a second forming portion 16b for forming the second structural portion 42. The second forming portion 16b has a rectangular shape as viewed in the stacking direction Y3. In the second forming portion 16b, the first weft layer 21, the first warp layer 31, the second weft layer 22, the third weft layer 23, the second warp layer 32, and the fourth weft layer 24 are bound together in the stacking direction Y3 by the first binding yarns 15a and the second binding yarns 15b. The second forming portion 16b thus has six fiber layers.

The fiber structure 11 includes a folding portion 16c in the middle of the first binding portion 16 in the first direction Y1. The folding portion 16c is the boundary section between the first forming portion 16a and the second forming portion 16b. The first corner section 51 is formed along the folding portion 16c. As a result, the first forming portion 16a and the second forming portion 16b are connected to each other at the folding portion 16c, which forms the first corner section 51. The folding portion 16c is also an edge section of each of the first and second forming portions 16a, 16b.

The section of the second binding portion 17 of the fiber structure 11 from the middle to the first end in the first direction Y1 is a third forming portion 17a for forming the third structural portion 43. The third forming portion 17a has a rectangular shape as viewed in the stacking direction Y3. In the third forming portion 17a, the first weft layer 21, the first warp layer 31, and the second weft layer 22 are bound together in the stacking direction Y3 by the first binding yarns 15a and the second binding yarns 15b. The third forming portion 17a thus has three fiber layers.

The section of the second binding portion 17 of the fiber structure 11 from the middle to the second end in the first direction Y1 is a second forming portion 17b for forming the second structural portion 42. The second forming portion 17b has a rectangular shape as viewed in the stacking direction Y3. In the second forming portion 17b, the first weft layer 21, the first warp layer 31, and the second weft layer 22 are bound together in the stacking direction Y3 by the first binding yarns 15a and the second binding yarns 15b. The second forming portion 17b thus has three fiber layers.

The fiber structure 11 includes a folding portion 17c in the middle of the second binding portion 17 in the first direction Y1. The folding portion 17c is the boundary section between the third forming portion 17a and the second forming portion 17b. The third corner section 53 is formed along the folding portion 17c. As a result, the third forming portion 17a and the second forming portion 17b are connected to each other at the folding portion 17c, which forms the third corner section 53. The folding portion 17c is also an edge section of each of the third and second forming portions 17a, 17b.

The section of the third binding portion 18 of the fiber structure 11 from the middle to the first end in the first direction Y1 is a third forming portion 18a for forming the third structural portion 43. The third forming portion 18a has a rectangular shape as viewed in the stacking direction Y3. In the third forming portion 18a, the third weft layer 23, the second warp layer 32, and the fourth weft layer 24 are bound together in the stacking direction Y3 by the first binding yarns 15a and the second binding yarns 15b. The third forming portion 18a thus has three fiber layers.

The section of the third binding portion 18 of the fiber structure 11 from the middle to the second end in the first direction Y1 is a third forming portion 18b for forming the third structural portion 43. The third forming portion 18b has a rectangular shape as viewed in the stacking direction Y3. In the third forming portion 18b, the third weft layer 23, the second warp layer 32, and the fourth weft layer 24 are bound together in the stacking direction Y3 by the first binding yarns 15a and the second binding yarns 15b. The third forming portion 18b thus has three fiber layers.

The fiber structure 11 includes a cut portion 18c in the middle of the third binding portion 18 in the first direction Y1. The cut portion 18c is the boundary between the third forming portion 18a and the third forming portion 18b and separates the third forming portions 18a, 18b from each other. Specifically, the cut portion 18c is formed by weaving the fiber structure 11 including the first binding portion 16, the second binding portion 17, and the third binding portion 18 using a loom and then cutting the fiber structure 11.

The fiber structure 11 includes a folding portion 19a, which is the boundary section between the first forming portion 16a and the third forming portion 17a in the second direction Y2. The second corner section 52 is formed along the folding portion 19a. As a result, the first forming portion 16a and the third forming portion 17a are connected to each other at the folding portion 19a, which forms the second corner section 52. The folding portion 19a is also an edge section of each of the first and third forming portions 16a, 17a.

The fiber structure 11 also includes a cut portion 19b in the boundary between the second forming portion 16b and the second forming portion 17b in the second direction Y2. The cut portion 19b is formed by weaving the fiber structure 11 including the first binding portion 16, the second binding portion 17, and the third binding portion 18 using a loom and then cutting the fiber structure 11.

The fiber structure 11 includes a folding portion 19c, which is the boundary section between the second forming portion 16b and the third forming portion 18b in the second direction Y2. The third corner section 53 is formed along the folding portion 19c. As a result, the second forming portion 16b and the third forming portion 18b are connected to each other at the folding portion 19c, which forms the third corner section 53. The folding portion 19c is also an edge section of each of the second and third forming portions 16b, 18b. The first forming portion 16a, the second forming portions 16b, 17b, and the third forming portions 17a, 18a, 18b are equally sized.

In the fiber structure 11 before shaping, the second forming portion 16b, which is one of the second forming portions, is connected to the folding portion 16c of the first forming portion 16a by the wefts 13. Also, the third forming portion 18b, which is one of the third forming portions, is connected to the folding portion 19c of the second forming portion 16b by the warps 14. Further, the third forming portions 17a, 18a, which are the other two of the third forming portions, are connected to the folding portion 19a of the first forming portion 16a by the warps 14. Also, the second forming portion 17b, which is the other one of the second forming portions, is connected to the folding portion 17c of the third forming portion 17a, which is one of the third forming portions, by the wefts 13.

In the fiber structure 11, which has the above-described configuration, the warps 14 extend continuously in the first forming portion 16a of the first binding portion 16 and the third forming portion 17a of the second binding portion 17 in the second direction Y2. The first forming portion 16a and the third forming portion 17a are connected to each other in the second direction Y2. The warps 14 extend continuously in the first forming portion 16a and the third forming portion 18a of the third binding portion 18 in the second direction Y2. The first forming portion 16a and the third forming portion 18a are connected to each other in the second direction Y2. The warps 14 also extend continuously in the second forming portion 16b of the first binding portion 16 and the third forming portion 18b of the third binding portion 18 in the second direction Y2. The second forming portion 16b and the third forming portion 18b are connected to each other in the second direction Y2.

The wefts 13 extend continuously in the first forming portion 16a and the second forming portion 16b of the first binding portion 16 in the first direction Y1. The first forming portion 16a and the second forming portion 16b are connected to each other in the first direction Y1. The wefts 13 also extend continuously in the third forming portion 17a and the second forming portion 17b of the second binding portion 17 in the first direction Y1. The third forming portion 17a and the second forming portion 17b are connected to each other in the first direction Y1.

A method of shaping the fiber structure 11 having the flat plate-like shape into the fiber structure 11 having the cubic shape will hereafter be described.

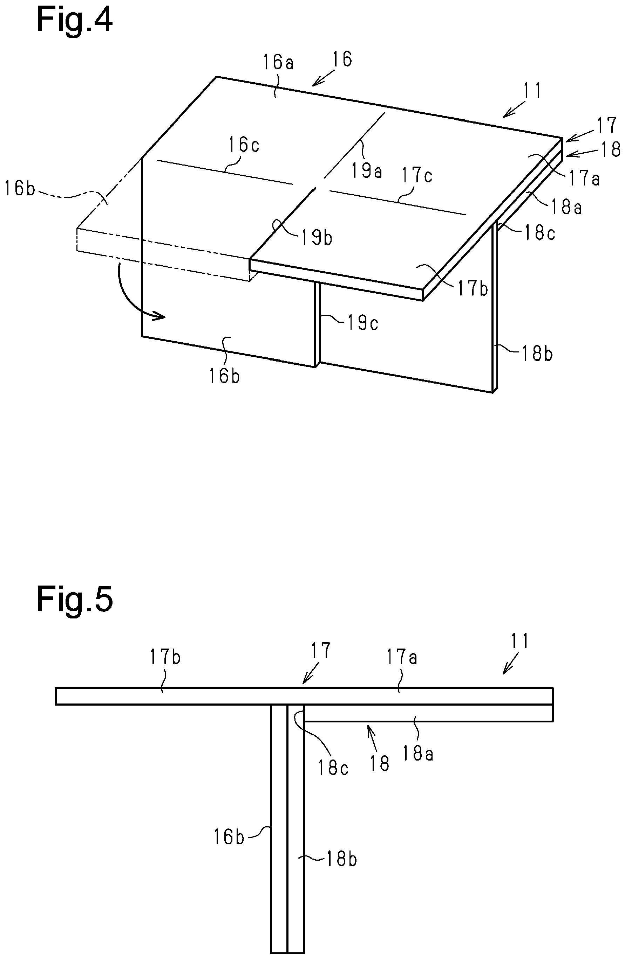

First, as shown in Fig. 4 or 5, the first binding portion 16 is folded perpendicularly along the folding portion 16c. This shapes the second forming portion 16b into a state extending perpendicularly to the first forming portion 16a. Also, the third forming portion 18b, which is connected to the second forming portion 16b, is shaped into a state extending perpendicularly to the second binding portion 17.

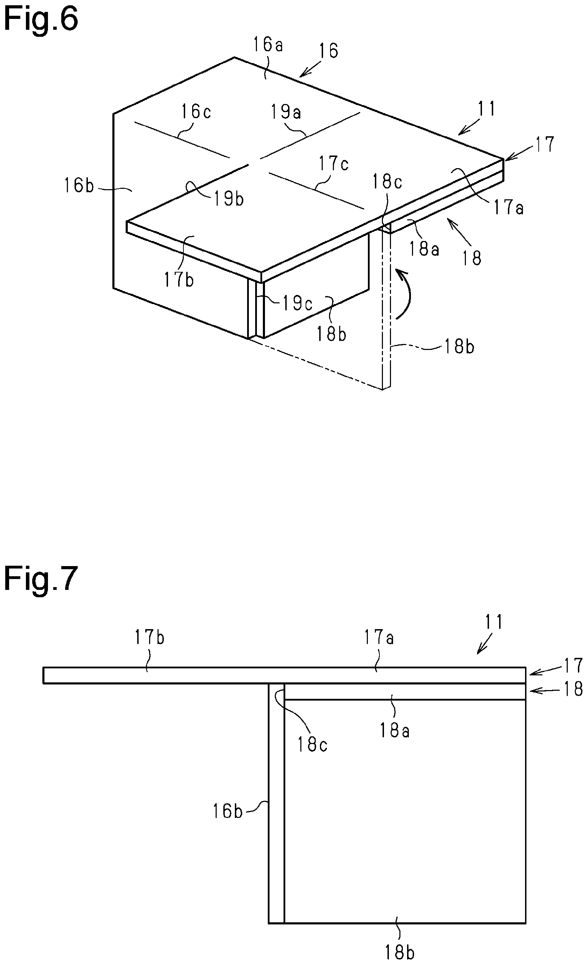

Then, as shown in Fig. 6 or 7, the third forming portion 18b is folded at the folding portion 19c. This shapes the third forming portion 18b into a state extending perpendicularly to the second forming portion 16b.

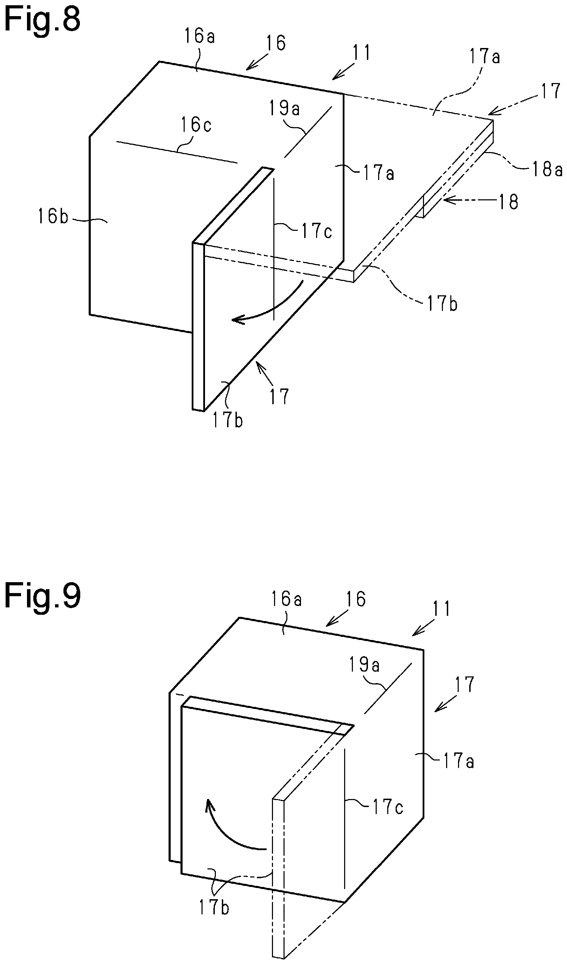

Subsequently, with reference to Fig. 8, the second binding portion 17 is folded at the folding portion 19a, thus shaping the third forming portion 17a in a manner extending perpendicularly to the first forming portion 16a. At this time, the second forming portion 17b, which is connected to the third forming portion 17a, is also shaped into a state extending perpendicularly to the first forming portion 16a.

Next, referring to Fig. 9, the second binding portion 17 is folded at the folding portion 17c. This shapes the second forming portion 17b in a manner extending perpendicularly to the third forming portion 17a.

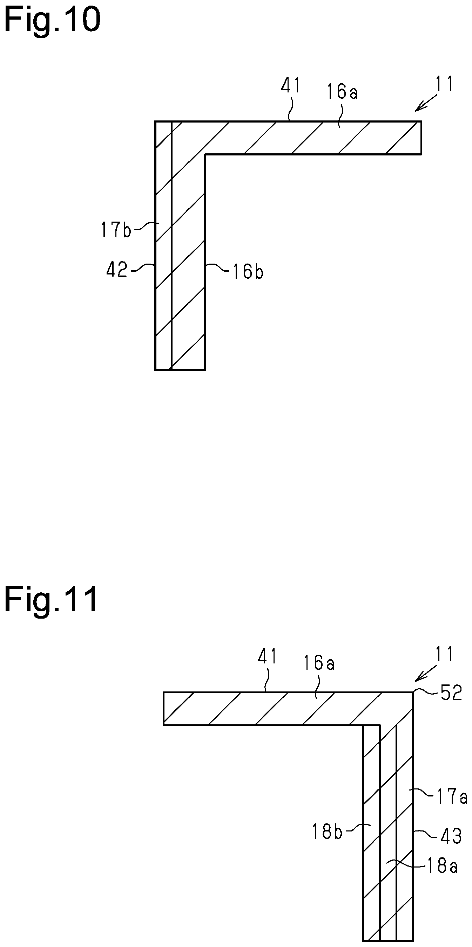

In this manner, as shown in Fig. 10, the first structural portion 41 is formed by the first forming portion 16a. Also, the second forming portion 16b and the second forming portion 17b of the second binding portion 17 are stacked with each other, thus forming the second structural portion 42.

Further, referring to Fig. 11, the third forming portion 17a of the second binding portion 17 and the third forming portions 18a, 18b of the third binding portion 18 are stacked together, thus forming the third structural portion 43.

The operation of the fiber structure 11 will hereafter be described.

As shown in Fig. 1, in the fiber structure 11, the first structural portion 41 is formed directly by the first forming portion 16a. The first structural portion 41 is thus formed by the first weft layer 21, the first warp layer 31, the second weft layer 22, the third weft layer 23, the second warp layer 32, and the fourth weft layer 24. The first structural portion 41 thus has six fiber layers.

The second structural portion 42 is formed by the second forming portion 16b of the first binding portion 16 and the second forming portion 17b of the second binding portion 17. The second structural portion 42 is thus formed by the first weft layer 21, the first warp layer 31, the second weft layer 22, the third weft layer 23, the second warp layer 32, and the fourth weft layer 24 of the second forming portion 16b, as well as the first weft layer 21, the first warp layer 31, and the second weft layer 22 of the second forming portion 17b. As a result, the second structural portion 42 has nine fiber layers.

As illustrated in Fig. 11, the third structural portion 43 is formed by the third forming portion 17a of the second binding portion 17, and the third forming portions 18a, 18b of the third binding portion 18. The third structural portion 43 is thus formed by the first weft layer 21, the first warp layer 31, and the second weft layer 22 of the third forming portion 17a, as well as the third weft layer 23, the second warp layer 32, and the fourth weft layer 24 of the third forming portion 18a and the third weft layer 23, the second warp layer 32, and the fourth weft layer 24 of the third forming portion 18b. As a result, the third structural portion 43 has nine fiber layers.

With reference to Fig. 1, the fiber structure 11 includes the first corner section 51, which is the boundary section between the first structural portion 41 and the second structural portion 42. The first corner section 51 is bent along the folding portion 16c. The wefts 13 are thus bent by the first corner section 51 from the state extending in the first direction Y1. In this manner, the first structural portion 41 and the second structural portion 42 are connected to each other by the wefts 13 and are continuous to each other.

The fiber structure 11 includes the second corner section 52, which is the boundary section between the first structural portion 41 and the third structural portion 43. The second corner section 52 is bent along the folding portion 19a. The warps 14 are thus bent by the second corner section 52 from the state extending in the second direction Y2. In this manner, the first structural portion 41 and the third structural portion 43 are connected to each other by the warps 14 and are continuous to each other.

The fiber structure 11 includes the third corner section 53, which is the boundary section between the second structural portion 42 and the third structural portion 43. The third corner section 53 is bent along the folding portion 17c. The wefts 13 and warps 14 are thus bent by the third corner section 53. In this manner, the second structural portion 42 and the third structural portion 43 are connected to each other by the wefts 13 and warps 14 and are continuous to each other.

The above-described embodiment has the following advantages.
(1) The fiber structure 11 before shaping is constituted by a multilayer woven fabric and includes the first binding portion 16, the second binding portion 17, and the third binding portion 18. The fiber structure 11 is weaved by a loom using the wefts 13, the warps 14, the first binding yarns 15a, and the second binding yarns 15b. The cut portions 18c, 19b are then formed in the fiber structure 11 having the rectangular plate-like shape. Afterwards, the fiber structure 11 is shaped into the fiber structure 11 having the cubic shape. This makes it unnecessary to stack sheets of base material together to manufacture a fiber structure, thus facilitating the manufacture of the fiber structure 11. Also, the manufacturing cost is saved compared to a case that involves weaving using a special loom.
   Further, in the fiber structure 11 having the cubic shape, the wefts 13 ensure that the first corner section 51 is a continuous body, and the warps 14 ensure that the second corner section 52 is a continuous body. Also, the wefts 13 and the warps 14 ensure that the third corner section 53 is a continuous body. That is, the yarns are maintained without being cut in the first to third corner sections 51 to 53, thus reinforcing the first to third corner sections 51 to 53.
(2) While the first structural portion 41 has six fiber layers, the second and third structural portions 42, 43 each have nine fiber layers. That is, each of the second and third structural portions 42, 43 has a greater number of fiber layers than the first structural portion 41. This reinforces the second structural portion 42 and the third structural portion 43.
(3) The warps 14 extend continuously in the second forming portion 16b of the first binding portion 16 and the third forming portion 18b of the third binding portion 18. The wefts 13 extend continuously in the third forming portion 17a and the second forming portion 17b of the second binding portion 17. As a result, when the second structural portion 42 and the third structural portion 43 are formed, the wefts 13 and the warps 14 extend continuously in the third corner section 53. This reinforces the third corner section 53 by the two types of yarns.
(4) In the fiber structure 11 before shaping, the first to third binding portions 16 to 18 are each bound by the first binding yarns 15a and the second binding yarns 15b in the stacking direction Y3. As a result, despite the fact that the fiber structure 11 has the cut portions 18c, 19b for its shaping, the fiber structure 11 is maintained without becoming disintegrated. This facilitates the shaping.
(5) In each of the first to third structural portions 41 to 43, the fiber layers are bound together in the stacking direction Y3 by the first binding yarns 15a and the second binding yarns 15b. The fiber structure 11 is weaved by a loom. Therefore, compared to a case in which fiber layers are separately weaved and then stacked together to manufacture the fiber structure 11, the fiber structure 11 having the bound fiber layers is manufactured easily.

The above-described embodiment may be modified as follows.

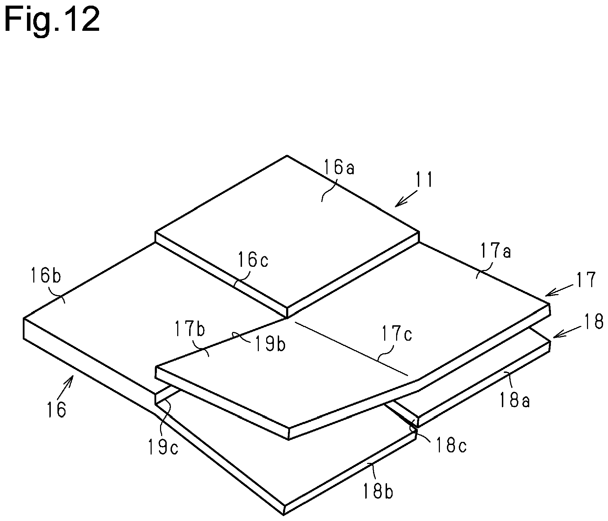

As shown in Fig. 12, if the first forming portion 16a has six fiber layers, the second forming portion 16b may have four fiber layers. In other words, the second forming portion 16b may have fewer fiber layers than the first forming portion 16a. In an alternative case, the third forming portion 17a and the second forming portion 17b of the second binding portion 17 each have two fiber layers and the third forming portion 18a and the third forming portion 18b of the third binding portion 18 each have two fiber layers. The first structural portion 41 is formed directly by the first forming portion 16a and the second structural portion 42 is formed by the second forming portion 16b and the second forming portion 17b. Also, the third structural portion 43 is formed by the third forming portion 17a of the second binding portion 17 and the third forming portions 18a, 18b of the third binding portion 18.

In this configuration, the first structural portion 41, the second structural portion 42, and the third structural portion 43 each have six fiber layers. This equalizes the strengths of the first to third structural portions 41 to 43.

By changing the number of fiber layers as needed, the strength of each of the first to third structural portions 41 to 43 is varied.

The second binding portion 17 may be constituted simply by the third forming portion 17a. In this case, the yarns extending continuously in the second structural portion 42 and the third structural portion 43 at the third corner section 53 may be constituted simply by the warps 14 extending continuously in the second forming portion 16b and the third forming portion 18b. Alternatively, the third binding portion 18 may be constituted simply by the third forming portion 18a. In this case, the yarns extending continuously in the second structural portion 42 and the third structural portion 43 at the third corner section 53 may be constituted simply by the wefts 13 extending continuously in the third forming portion 17a and the second forming portion 17b.

An additional forming portion for forming a structural portion may be connected to any of the four outer edge sections of the fiber structure 11 having the flat plate-like shape.

Each of the fiber layers in the fiber structure 11 may be formed by plain weaving, satin weaving, or twill weaving.

The numbers of weft layers and warp layers stacked in the fiber structure 11 may be changed as needed.

If the fiber structure 11 is used as a reinforcement base material for the fiber reinforced composite material 10, the type of the matrix resin is selected as needed.

Although the first structural portion 41, the second structural portion 42, and the third structural portion 43 all have a rectangular shape, the invention is not restricted to this. For example, each of the first to third structural portions 41 to 43 may have any suitable shape such as a trapezoidal or circular shape.

## Claims

1. A fiber structure comprising:
a first forming portion that forms a first structural portion;
a plurality of second forming portions that are stacked together and form a second structural portion that crosses the first structural portion;
a plurality of third forming portions that are stacked together and form a third structural portion that crosses the first structural portion and the second structural portion;
a first corner section that is a boundary section between the first structural portion and the second structural portion;
a second corner section that is a boundary section between the first structural portion and the third structural portion; and
a third corner section that is a boundary section between the second structural portion and the third structural portion, wherein
the first forming portion, the second forming portions, and the third forming portions are each constituted by a multilayer woven fabric having a plurality of fiber layers that are stacked together and a binding yarn that binds the fiber layers together in a stacking direction,
the fiber layers includes a fiber layer formed by a plurality of first yarns that are parallel to one another and a fiber layer formed by a plurality of second yarns that are parallel to one another,
those of the first yarns that extend continuously in the first structural portion and the second structural portion are bent at the first corner section,
those of the second yarns that extend continuously in the first structural portion and the third structural portion are bent at the second corner section, and
at least either those of the first yarns that extend continuously in the second structural portion and the third structural portion or those of the second yarns that extend continuously in the second structural portion and the third structural portion are bent along the third corner section.

2. The fiber structure according to claim 1, wherein
the second forming portions include a primary second forming portion that is connected to the first forming portion and a secondary second forming portion that is stacked with the primary second forming portion,
the third forming portions include a primary third forming portion that is connected to the first forming portion and a secondary third forming portion that is stacked with the primary third forming portion,
the first forming portion and the primary second forming portion are connected to each other at the first corner section by the first yarns,
the primary second forming portion and the secondary third forming portion are connected to each other at the third corner section by the second yarns,
the first forming portion and the primary third forming portion are connected to each other at the second corner section by the second yarns, and
the primary third forming portion and the secondary second forming portion are connected to each other at the third corner section by the first yarns.

3. The fiber structure according to claim 2, wherein the primary second forming portion and the primary third forming portion each have the same number of fiber layers as the first forming portion.

4. The fiber structure according to claim 2, wherein
a number of the fiber layers that the primary second forming portion has is smaller than a number of the fiber layers that the first forming portion has,
a number of the fiber layers that the secondary third forming portion has is smaller than a number of the fiber layers that the first forming portion has,
a number of the fiber layers that the primary third forming portion has is smaller than a number of the fiber layers that the first forming portion has,
a number of the fiber layers that the secondary second forming portion has is smaller than a number of the fiber layers that the first forming portion has, and
a number of the fiber layers that each of the second structural portion and the third structural portion has is equal to a number of the fiber layers that the first structural portion has.

5. A fiber reinforced composite material comprising:
the fiber structure according to any one of claims 1 to 4; and
a matrix resin with which the fiber structure is impregnated.
